# EUROPEAN PATENT APPLICATION

(11) **EP 1 939 734 A2**
(43) Date of publication of application: **02.07.2008**
(21) Application number: 07254913.2
(22) Date of filing: 18.12.2007
(51) Int. Cl.: G06F 9/445

(54) **Creating a self-service application in a self-service terminal**

(30) Priority: 29.12.2006 US 877883 P; 31.10.2007 US 981286
(71) Applicant: NCR Corporation, Dayton, Ohio 45479 (US)
(72) Inventor: Rossmann, Wolf D., Forfar Angus DD8 1UN (GB); Savage, John G., Tayport Fife DD6 9BW (GB)
(74) Representative: Williamson, Brian

(57) **Abstract**

A self-service terminal (SST) is configured for operation under control of an application in a manner that allows updates to the application at the SST without redistribution of executable files and without a shutdown or restart of the SST. One technique for accomplishing this involves storing computer-executable objects that, when executed, serve as components of the self-service application; and storing one or more structural files that together define relationships among the computer-executable objects such that, when the computer-executable objects are executed, the relationships defined by the structural files govern operational flow of the self-service application. The technique also involves storing one or more computer-executable files that, when executed, cause the self-service terminal to instantiate the computer-executable objects that serve as components of the self-service application, and configure the objects for operation according to the relationships defined in the one or more structural files.

## Description

Self-service terminals, such as automated teller machines (ATMs) used in the banking industry or self-service kiosks used in the airline and fast-food industries, are becoming increasingly common in all areas of commerce all over the world. Each of these terminals includes physical hardware that allows human users to interact with the terminals in conducting transactions with the business entities that own or operate the terminals. The physical hardware associated with a self-service terminal (or "SST") typically includes a computer system that is driven by one or more computer-readable programs, or applications, that together govern the SST's behavior as it interacts with the human user.

SSTs typically reside in large networks, in which many SSTs are managed by a single business entity or by multiple entities acting in concert. For ease of management and consistency of operation of the SSTs in a network, the business entity managing the network typically installs a common set of applications among all (or some subset) of the SSTs in the network. Each of these applications includes one or more "executable" files containing computer-executable code that defines the flow of the application as it drives operation of the SST. Executable files are well-known in the computer industry and are not described in any detail here. In the PC industry, these files are typically named with a ".exe" or ".dll" extension so that the computer will recognize them as executable files.

To install applications on the SSTs in the network, the business entity must deliver the executable files that make up the applications to the SSTs, typically by sending the executable files over the network or by having human administrators carry the executable files to the SSTs on portable storage media, such as CD-ROMs. Once the applications are installed to the SSTs, the SSTs can run the applications by invoking the corresponding executable files.

A lingering frustration and source of unwanted cost for any business entity that owns and manages SSTs occurs when the business entity wishes to change an application that it has installed to its SSTs. To do so, the business entity must typically alter the executable files associated with the application at a central location and then distribute and install those files to the SSTs across the network. Reinstallation of executable files typically requires restart of each SST, thus forcing the business entity take the SST "off line" for some period of time. Reinstallation of files also requires the business entity to expend the management costs necessary to oversee the installation and to ensure proper shut down and restart of the SST.

Described below are techniques for use in configuring a self-service terminal (SST) for operation under control of an application in a manner that allows updates to the application at the SST without redistribution of executable files and without a shutdown or restart of the SST. One such technique involves storing computer-executable objects that, when executed, serve as components of the self-service application; and storing one or more structural files that together define relationships among the computer-executable objects such that, when the computer-executable objects are executed, the relationships defined by the structural files govern operational flow of the self-service application. The technique also involves storing one or more computer-executable files that, when executed, cause the self-service terminal to instantiate the computer-executable objects that serve as components of the self-service application, and configure the objects for operation according to the relationships defined in the one or more structural files.

Another technique involves creating a copy of the self-service application by (1) executing one or more computer-executable files that cause the self-service terminal to instantiate within the self-service terminal copies of one or more computer-executable objects that, when executed, serve as components of the self-service application; and (2) accessing one or more structural files that together define relationships among the computer-executable objects such that, when the computer-executable objects are executed, the relationships defined by the structural files govern operational flow of the self-service application. At some point thereafter, the technique also involves executing the self-service application to cause the self-service terminal to engage in a self-service transaction with a human user of the self-service terminal.

Embodiments of the present invention will now be described, by way of example, with reference to the accompanying drawings, in which:
FIG. 1 is a diagram showing a traditional technique for developing self-service applications and installing those applications on a self-service terminal (SST).
FIGS. 2 and 3 are diagrams showing a technique for instantiating a self-service application at the SST itself.
FIG. 4 is a diagram showing a technique for distributing to an SST the components necessary for creating a self-service application in the SST.
FIG. 5 is a diagram showing a technique for making changes to an application created in an SST.
FIG. 6 is a diagram showing a computer system suitable for use in implementing the SST of FIGS. 2 through 5.

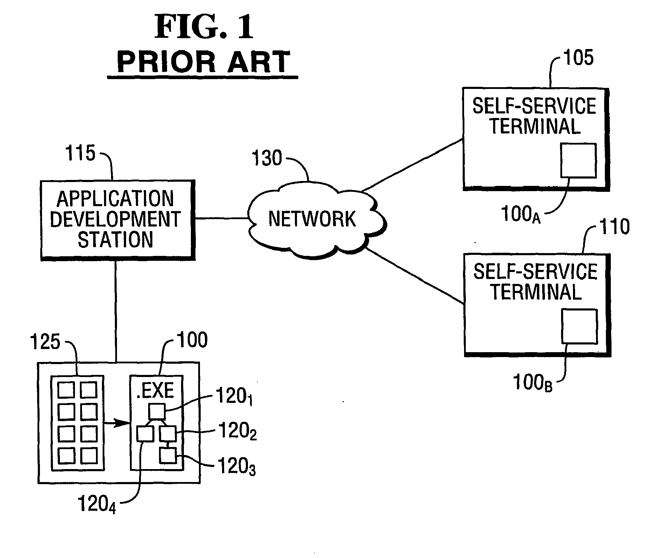

FIG. 1 illustrates the traditional approach for development of a self-service application 100 and distribution of that application to self-service terminals 105, 110 (SSTs) across a network of SSTs. An application-development station 115, such as a personal computer at an application-development center owned by the business entity that manages operation of the SSTs, is used to design and create the self-service application 100. The application 100 typically consists of multiple program objects or modules 120₁₋₄ that are selected from a library of such objects (or "object library" 125) and organized into a prescribed structure that is embedded into computer-executable program code. The computer-executable code is stored as one or more executable files that contain the program objects 120₁₋₄ of the self-service application 100 and that define the relationships among those program objects 120₁₋₄, thus defining the operational flow of the application 100 as it executes on an SST.

For example, a self-service application for use in an automated teller machine (ATM) usually includes an object for conducting a cash-withdrawal transaction at the ATM. A "cash-withdrawal" object typically has many properties, including a "denomination" property identifying the currency denominations available for withdrawal from the ATM and a "timeout" property specifying a time limit for completion of the transaction. The properties of the cash-withdrawal transaction also include a "PIN information" property and an "authorization" property. The "PIN information" property calls a "PIN" object that itself has a set of associated properties, which together lead the ATM through a sequence of steps to capture PIN (personal identification number) information from the ATM customer's bank card and to match that information to the PIN code entered by the customer into the ATM's encrypted PIN pad (EPP). The "authorization" property likewise calls an "authorization" object that guides the ATM as it interacts with a transaction host to authorize the cash-withdrawal requested by the ATM customer.

When the self-service application 100 has been fully developed and tested at the application-development station 115, the business entity that manages the SSTs 105, 110 delivers the executable files that make up the application to the SSTs 105, 100. To do so, the business entity distributes the executable files through a network 130 or through a physical storage medium, such as a CD-ROM, carried to the SSTs by a human administrator. The executable files are typically stored locally at the SSTs 105, 110 to create copies 100_{A}, 100_{B} of the self-service application 100 at the SSTs. In some networks, however, the executable files are stored on one or more server systems that service multiple connected SSTs. Either way, the SSTs 105, 110 invoke the copies 100_{A}, 100_{B} of the self-service application as necessary to interact with human users who engage the SSTs for the purpose of conducting business transactions with the business entity that owns or operates the SSTs.

As described above, any changes to be made to the self-service application 100, including changes to any of the program objects 120₁₋₄ contained within the application, require modification of the executable files that make up the application on the application-development station 115. The modified executable files must then be distributed to the SSTs 105, 110 to create updated versions of the copies 100_{A}, 100_{B} of the self-service application 100 stored at the SSTs.

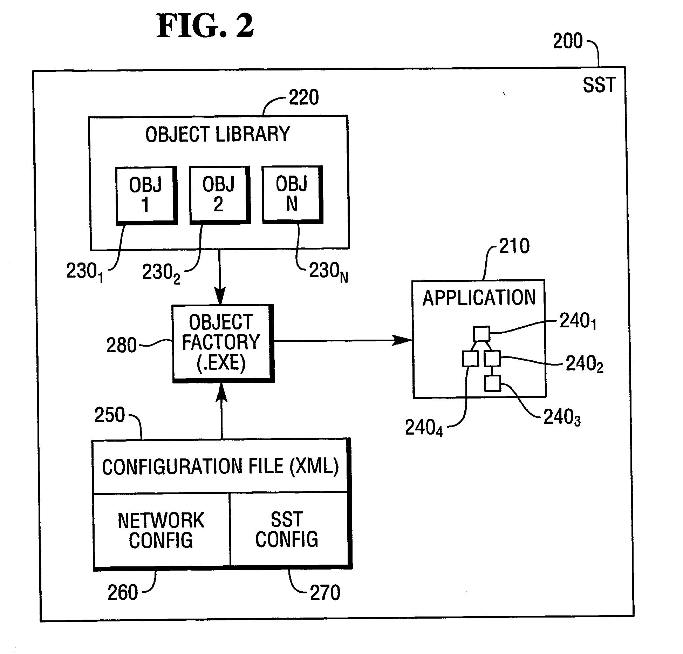

FIG. 2 shows a self-service terminal (SST) 200, such as an automated teller machine (ATM) at a bank or a self-service kiosk at an airport or fast-food restaurant, that is configured for creation of a self-service application 210 within the SST 200 itself. Stored within the SST 200 are several components that are used in building the self service application 210. These components include: (1) an object library 220 that contains multiple program objects 230_{1-N} from which one or more program objects 240₁₋₄ that make up the application 210 are selected; (2) a configuration file 250 that indicates which of the program objects 230_{1-N} in the object library 220 are to be used in creating the self-service application 210 and that defines the relationships among those program objects; and (3) an "object factory" 280, which includes one or more executable files containing the computer-executable code necessary to read the configuration file 250, to retrieve the necessary program objects 240₁₋₄ from the object library 220, and to create the self-service application 210 accordingly.

The program objects 230_{1-N} contained in the object library are standard computer-executable program objects like those described in connection with the traditional system described above and are not described in any detail here. Likewise, the object factory 280 is similar to code-development programs found in traditional application-development environments and is not described in great detail here. The object factory 280 is unique in that it is configured to parse through the configuration file 250 to extract configuration information identifying the program objects 240₁₋₄ that make up the self-service application 210 and their relationships and configuration parameters in the self-service application. As described in more detail below, the SST 200 invokes the object factory 280 to build the self-service application 210, which the SST 200 then stores and invokes as needed to govern interaction with human users of the SST 200.

The configuration file 250, on the other hand, is not a file containing computer-executable program code, but rather is a computer-readable "document" that identifies (1) the program objects that are to make up the application, (2) the properties of each object and relationships that exist among the objects (e.g., calls from one object to another object), and (3) the configuration parameters of the object (e.g., the set of circumstances under which a particular action will be taken or a related object will be called). The configuration file 250 is, in essence, a "structural" file - *i.e.,* a file that defines the structure of the application by specifying the components of the application and the relationships among those components. As a result, the configuration file 250 is particularly suited for implementation as a markup-language document, such as document following the Extensible Markup Language (XML) specification put forth by the World Wide Web Consortium (W3C).

In general, the configuration file 250 will conform to a specified schema (as defined by the business entity that owns or manages the network ofSSTs) to ensure that the object factory 280 is able to read and correctly interpret the information contained in the configuration file. Apart from its adherence to the schema, however, the actual content of the configuration file 250 is of no concern to the object factory 280. As described below, the object factory 280 must simply be able to read and interpret the information in the configuration file 250 and use the information to build the self-service application 210.

In some systems, the configuration file 250 consists of or references multiple configuration components, which themselves are structural documents following the schema specified for the configuration file 250. In the example of FIG. 2, the configuration file 250 includes two such components - a "network configuration" component 260 and an "SST configuration" component 270. The network configuration component 260 identifies program objects, as well as their relationships and configuration parameters, that are to be used in building self-service applications in all (or some subset) of the SSTs in the network. The SST configuration component 270 includes object and configuration information that applies to the specific SST 200 in which the self-service application 210 is built. In some networks, the network configuration component 260 is not stored with the configuration file 250 on the SST, but rather is stored on a server system that serves multiple SSTs.

By referencing multiple configuration components in the configuration file 250 in this manner, the owner or manager of the network of SSTs is able to tailor the self-service application to the specific SST on which it resides, while still maintaining a common configuration file that allows simple distribution en masse to all SSTs in the network. For any changes made to the self-service application that will affect all of the SSTs in the network, the business entity managing the SSTs can distribute a revised network configuration component 260 across the network and thus update (or rebuild) the self-service application in each of the SSTs without affecting the SST specific portions of the application. Likewise, for any change made to the application that will affect only one SST, the business entity can deliver a revised SST configuration component 270 directly to that SST and leave the network-wide portions of the application untouched. As described below, the object factory 280, when building the self-service application 210, first accesses the network configuration component 260 and builds the network-wide portion of the application and then accesses the SST configuration component 270 to tailor the application to the specific SST 200.

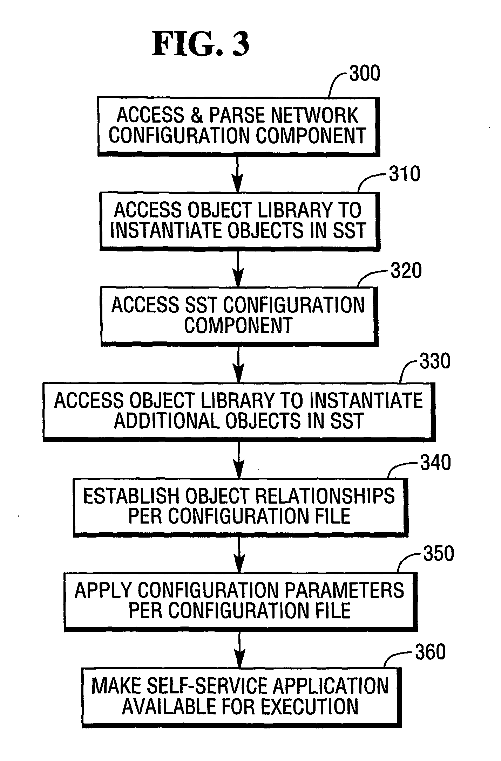

FIG. 3 shows a flow for the process followed by the objective factory (OF) application when building the self-service application in the SST. The OF application first accesses the network configuration component of the configuration file and parses the information found in this component (step 300). The OF application subsequently accesses the object library and instantiates those objects called out in the network configuration component (step 310). The OF application also accesses and parses the SST configuration component (step 320) and then accesses the object library to instantiate any additional objects called out by the SST configuration component (step 330). The OF application then embeds among the instantiated objects the relationships defined by the network and SST configuration components (step 340) and applies to each of the instantiated objects the configuration parameters specified by the network and SST configuration components (step 350). The OF application then stores the newly constructed self-service application in the SST and makes it available for execution by the SST (step 360).

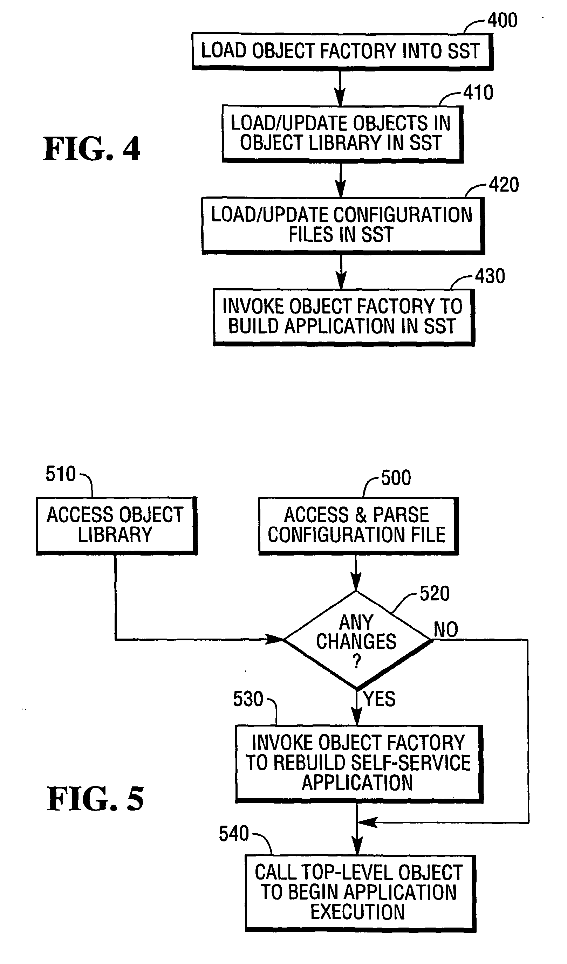

FIG. 4 illustrates a technique for distributing to an SST the components necessary for creating a self-service application in the SST and, if necessary, distributing updates for these components. The business entity that owns or manages the SST delivers the components to the SST through a network or through a portable storage medium such as a CD-ROM or removable memory device. The business entity delivers the object factory (OF) application to the SST and stores the OF application in the SST (step 400). The business entity also delivers the object library (step 410) and the configuration file, including all of its multiple components (step 420), to the SST. When updates are made to either the object library (including any of the objects stored in it) or the configuration file (including any of its individual components), the business entity distributes the updated portions to the SST. At some point after all of these components are stored on the SST or associated server, the business entity instructs the SST to invoke the OF application and thus build the self-service application (step 430).

FIG. 5 shows a process for use in modifying the self-service application in the SST at runtime. In some systems, the SST is configured to check for changes to any of the self-service application's components each time it runs the application or at periodic or pre-scheduled intervals. To do so, the SST accesses the configuration file (including all of its individual components - e.g., the network and SST configuration components) and parses the information contained in the configuration file (step 500). The SST also accesses the object library to identify the revision level for each of the objects found in the self-service application (step 510). The SST then compares the object revision levels and the configuration information to that found in the current version of the self-service application and assesses whether any updates have occurred (step 520). If so, the SST invokes the object factory application to rebuild the self-service application using the updated objects and configuration information (step 530). Upon rebuilding the self-service application, or if no changes have occurred to any of the components of the self-service application, the SST calls the top-level object in the self-service application to begin execution of the application (step 540).

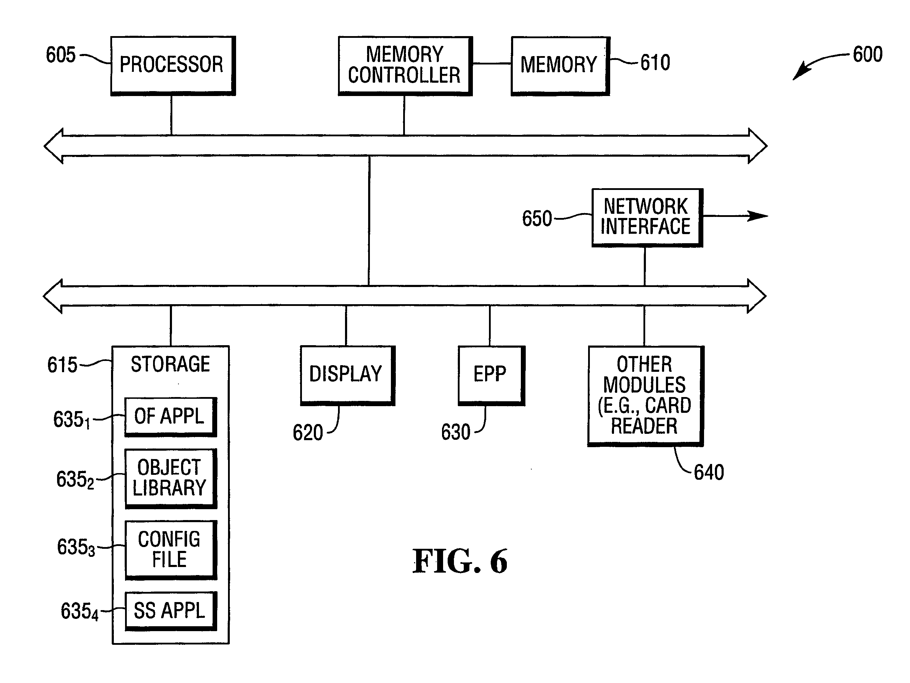

FIG. 6 shows a general-purpose computer system 600 suited for use in implementing a self-service terminal (SST) like those described above. In this example, the SST is configured to serve as an automated teller machine (ATM) for use in conducting financial-services transactions. In general, the system 600 includes one or more processors 605, one or more temporary data-storage components 610 (e.g., volatile and nonvolatile memory modules), and one or more persistent data-storage components 615 (e.g., optical and magnetic storage devices, such as hard and floppy disk drives, CD-ROM drives, and magnetic tape drives). The system 600 also includes one or more input devices, such as an encrypted PIN pad (EPP) module 630, and one or more output devices, such as a display module 620. The system 600 also typically includes many other modules 640 for use in conducting self-service transactions, such as a card reader, a cash dispenser, and a receipt printer, as well as a network interface module 650 that allows the SST to communicate with other devices through one or more networks.

The system 600 includes a variety of files 635₁₋₄ stored in the persistent storage media 615. These files include the object factory application 635₁, the object library 635₂, the configuration file 635₃, and the self-service application 635₄, all described above. Some of these files, such as the object factory application 635₁, include executable program code that is read from the persistent storage media 615 and copied into memory 610 at run-time. The processor 605 executes this executable program code by retrieving program instructions from memory in a prescribed order. Other files, such as the configuration file 635₃, do not include executable program code, but rather take the form of documents that store information (or data) in a prescribed format.

The text above describes one or more specific embodiments of a broader invention. The invention also is carried out in a variety of alternative embodiments and thus is not limited to those described here. Many other embodiments are also within the scope of the following claims.

## Claims

1. A method for use in configuring a self-service terminal for operation under control of a self-service application, the method comprising:
storing computer-executable objects that, when executed, serve as components of the self-service application;
storing one or more structural files that together define relationships among the computer-executable objects such that, when the computer-executable objects are executed, the relationships defined by the structural files govern operational flow of the self-service application; and
storing one or more computer-executable files that, when executed, cause the self service terminal to:
instantiate the computer-executable objects that serve as components of the self-service application; and
configure the objects for operation according to the relationships defined in the one or more structural files.

2. A method as claimed in 1, where the method includes executing the self-service application to cause the self-service terminal to engage in a self-service transaction with a human user of the self-service terminal.

3. A method as claimed in 2, where executing the self-service application includes executing one of the computer-executable objects that is defined as a top-level object by the one or more structural files.

4. A method as claimed in any preceding claim, where storing the computer-executable objects includes storing the objects within an object library in the self-service terminal.

5. A method as claimed in claim 4, where storing the computer-executable objects within an object library includes storing the objects among other computer-executable objects that serve as components of one or more applications other than the self-service application.

6. A method as claimed in any preceding claim, where storing the computer-executable objects includes storing an updated version of at least one of the computer-executable objects in the self-service terminal.

7. A method as claimed in any preceding claim, where storing the one or more structural files includes storing a network configuration file that defines relationships that are to exist among the computer-executable objects in each of multiple copies of the self-service application stored across multiple self-service terminals within a network of self service terminals.

8. A method as claimed in claim 7, where storing the one or more structural files also includes storing an SST-specific configuration file that further defines the relationships that are to exist among the computer-executable objects that serve as components of the self-service application in the self-service terminal.

9. A method as claimed in any preceding claim, where storing one or more structural files includes storing one or more markup-language documents.

10. A method as claimed in claim 9, where storing one or more markup-language documents includes storing one or more documents that comply with the Extensible Markup Language (XML) standard.

11. A method as claimed in any preceding claim, where storing the one or more structural files includes storing one or more files that define, in addition to the relationships among the computer-executable objects, one or more configuration parameters that govern operation of the self-service application upon execution of the computer-executable objects.

12. A method as claimed in any preceding claim, where storing the one or more structural files includes storing an updated version of at least one of the structural files.

13. A method as claimed in any preceding claim, further comprising executing the self-service application to cause the self-service terminal to engage in a self-service transaction with a human user of the self-service terminal and, upon doing so:
concluding that one or more changes have occurred in the one or more structural files since the computer-executable objects were instantiated and configured; and
again instantiating and reconfiguring one or more of the computer-executable objects as necessary to comply with the changes in the structural files.
